**Europäisches Patentamt**

**European Patent Office**

**Office européen des brevets**

(19)

(11) Veröffentlichungsnummer: **0 428 581 B1**

(12) # EUROPÄISCHE PATENTSCHRIFT

(45) Veröffentlichungstag der Patentschrift:
**29.04.92 Patentblatt 92/18**

(51) Int. Cl.⁵: **B60K 17/14, F16H 61/46**

(21) Anmeldenummer: **89908998.1**

(22) Anmeldetag: **08.08.89**

(86) Internationale Anmeldenummer:
**PCT/EP89/00936**

(87) Internationale Veröffentlichungsnummer:
**WO 90/01429 22.02.90 Gazette 90/05**

(54) **HYDROSTATISCHER ANTRIEB FÜR FAHRZEUGE.**

(30) Priorität: **11.08.88 DE 3827205**

(43) Veröffentlichungstag der Anmeldung:
**29.05.91 Patentblatt 91/22**

(45) Bekanntmachung des Hinweises auf die
Patenterteilung:
**29.04.92 Patentblatt 92/18**

(84) Benannte Vertragsstaaten:
**BE DE FR IT SE**

(56) Entgegenhaltungen:
**DE-A- 2 118 936**
**DE-A- 2 609 924**
**DE-A- 3 235 378**
**FR-A- 2 104 897**

(73) Patentinhaber: **ZF FRIEDRICHSHAFEN
Aktiengesellschaft
Löwentaler Strasse 100 Postfach 2520
W-7990 Friedrichshafen 1 (DE)**

(72) Erfinder: **MANN, Egon
Alamannenweg 11
W-7990 Friedrichshafen (DE)**

EP 0 428 581 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen hydrostatischen Antrieb für Fahrzeuge, insbesondere Raupenfahrzeuge, mit einem in einer Nabe eines Antriebsrades angeordneten Hydromotor, in bzw. an dessen Steuergehäuse neben anderen Steuerventilen Fahrbremsventile vorgesehen sind, die in Druckleitungen angeordnet sind und in Abhängigkeit vom Betriebsdruck des Hydromotors den Rückflußquerschnitt auf- bzw. zusteuern.

Hydrostatische Antriebe für Fahrzeuge sind bekannt (DE-C2 32 35 378). Dabei wird gefordert, daß der Antrieb insbesondere in axialer Richtung so kompakt baut, daß er seitlich nicht über die Breite einer Gleiskette eines Raupenbaggers oder eines Rades eines Fahrzeuges hervorragt. Gleichzeitig sollten die radialen Abmessungen im Bereich der Aufnahmezentrierung so gewählt sein, daß die Antriebsvorrichtung als komplette Einheit vormontiert ein- und ausgebaut werden kann. Diese Forderungen sind schwer zu erfüllen, wenn im bzw. am Steuergehäuse des Hydromotors neben anderen Steuerventilen Fahrbremsventile vorgesehen sind. Die Anordnung der Ventile unmittelbar am Steuergehäuse ist zweckmäßig, um durch kurze Steuerleitungen das Ansprechverhalten des Antriebs zu verbessern.

Der Erfindung liegt die Aufgabe zugrunde, durch Gestaltung und Anordnung der Ventile, insbesondere der Fahrbremsventile, die genannten Forderungen zu erfüllen. Diese Aufgabe wird erfindungsgemäß bei einem Antrieb der eingangs beschriebenen Art durch die Merkmale des kennzeichnenden Teils des Anspruches 1 gelöst.

Durch die erfindungsgemäße Gestaltung wirkt das Fahrbremsventil gleichzeitig als Hochdruckbegrenzungsventil, so daß zusätzliche Hochdruckbegrenzungsventile entfallen können. Dadurch ist es möglich, das Bauvolumen des Steuerdeckels mit Ventilen klein zu halten und die Fahrbremsventile als Einsteckventile so in den Steuerdeckel zu integrieren, daß sie im montierten Zustand durch die Aufnahmezentrierung des Antriebs geschoben werden können.

Um im Zugbetrieb die Zulaufquerschnitte zum Hydromotor zu vergrößern, ohne dabei das Bauvolumen der Fahrbremsventile zu erhöhen, ist parallel zu jedem Fahrbremsventil eine Bypassleitung vorgesehen, die mit je einem in Richtung des Hydromotors öffnenden Rückschlagventil versehen ist. Diese Ventile benötigen nur einen geringen Bauraum und können an geeigneter Stelle im Steuerdeckel untergebracht werden. Ferner ist es möglich, durch Änderung des Bypass den gleichen Hydromotor mit gleichem Steuerdeckel für verschiedene Volumenströme zu verwenden.

Um für den Betrieb des Hydromotors mit zwei Druckleitungen und einer Steuerleitung auszukommen, sind nach der Ausführung gemäß Anspruch 3 die Druckleitungen auf der dem Hydromotor abgewandten Seite der Fahrbremsventile durch eine Steuerleitung verbunden, in der ein Wechselventil angeordnet ist, von dem eine Steuerdruckleitung für einen Verstellmechanismus des Hydromotors abgeht.

Das Fahrbremsventil des erfindungsgemäßen Antriebs weist im Bereich des Ventilsitzes einen Drosselspalt auf, der sich mit der Öffnung des Fahrbremsventils allmählich erweitert. Dadurch läßt sich der Öffnungsquerschnitt über einen langen Steuerweg genau und stabil steuern. Schwingungen des Steuerkolbens im Bereich der Schließlage werden verhindert. Ferner weist gemäß einer Ausgestaltung der Erfindung der Steuerkolben einen Ausgleichsraum mit einer als Drosselstelle ausgebildeten Ausgleichsbohrung in der zum Hydromotor weisenden Stirnfläche auf. Der Ausgleichsraum wird auf der gegenüber der Ausgleichsbohrung liegenden Stirnseite von einem Stützkolben abgeschlossen, dessen wirksam Querschnittfläche geringfügig kleiner ist als die vom Ventilsitz eingeschlossene, druckbeaufschlagte Fläche. Dadurch können, trotz hoher Systemdrücke, die Druckfedern klein dimensioniert werden. Da beim Öffnen und Schließen ein Ölvolumen über die drosselnde Ausgleichsbohrung aus dem Ausgleichsraum herausströmt bzw. in denselben hineinfließt, wird die Steuerkolbenbewegung gedämpft, so daß sich keine sprunghaften Veränderungen ergeben. Eine weitere Dämpfung der Steuerkolbenbewegung erzielt man, wenn das Druckmittel zum Ansteuern des Steuerkolbens über eine Drosselstelle zu- bzw. abgeführt wird. Zweckmäßigerweise ist der Anschluß der Drucksteuerleitung als Drosselstelle ausgebildet.

Die übrigen Ansprüche enthalten Merkmale zur zweckmäßigen Gestaltung des Fahrbremsventils.

Die Ansprüche enthalten sinnvolle Kombinationen von Lösungsmerkmalen, allerdings sind für den Fachmann im Rahmen der Erfindung weitere Kombinationen ohne weiteres möglich.

In der Zeichnung ist ein Ausführungsbeispiel der Erfindung dargestellt. Es zeigen

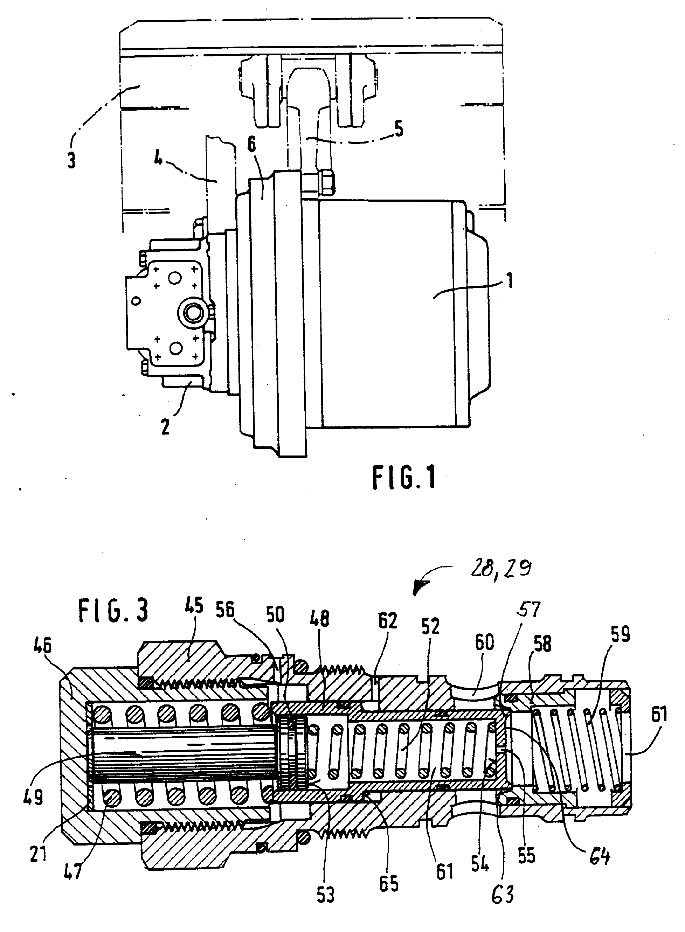

Fig. 1 eine Teilansicht eines montierten Hydromotors mit einem Steuergehäuse,

Fig. 2 einen Schaltplan eines erfindungsgemäßen hydrostatischen Antriebs,

Fig. 3 einen Längsschnitt durch ein Fahrbremsventil.

Ein Hydromotor 1 ist zusammen mit einem Steuergehäuse 2 als Antriebseinheit mittels Schrauben an einem Fahrzeugrahmen 4 montiert. Er treibt über ein zweistufiges Planetengetriebe 7 eine Nabe 6 eines Antriebsrades 5 einer Gleiskette 3 an. Der Durchmesser des Steuergehäuses 2 ist kleiner als der Durchmesser einer Aufnahmezentrierung des Antriebs, so daß die Antriebseinheit im montierten Zustand von außen durch die Auf-

EP 0 428 581 B1

nahmezentrierung gesteckt werden kann. In zwei Öffnungen 9 und 10 des Steuergehäuses 2 münden zwei Druckmittelleitungen 11, 12.

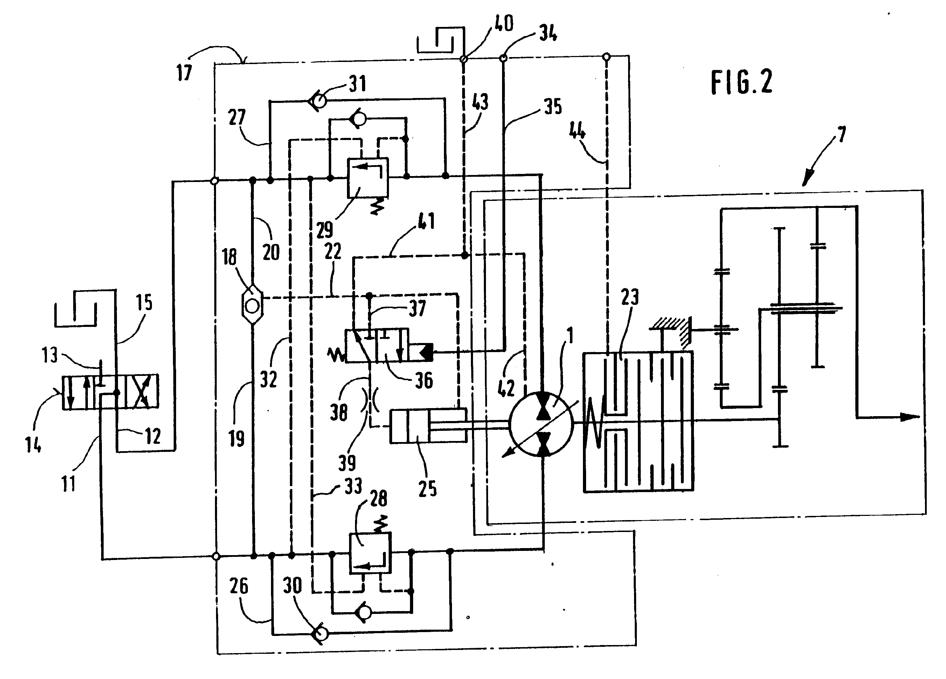

Der Schaltplan nach Fig. 2 zeigt anschaulich den funktionalen Zusammenhang der Druckmittelleitungen 11, 12, der Steuerelemente und des Hydromotors 1.

Eine Kraftmaschine treibt über ein Vorgelege eine Hydropumpe an (nicht dargestellt), die Druckmittel über eine Druckmittelleitung 13 zu einem Hydromotor 1 fördert. Die Druckmittelleitungen 11, 12, 13 und eine Rücklaufleitung 15 zu einem Tank 16 werden von einem 4/3-Wegeventil 14 beherrscht, das in der mittleren Stellung die Druckmittelleitung 13 verschließt und die übrigen 11, 12 mit der Rücklaufleitung 15 verbindet. Allerdings sind auch andere Ausführungen möglich, z. B. bei denen in der Neutralstellung die Druckleitungen 11, 12 nur untereinander verbunden oder einzeln abgesperrt sind. In den benachbarten Stellungen beaufschlagt das 4/3-Wegeventil eine der zwei Druckmittelleitungen 11, 12 mit Hochdruck und verbindet die jeweils andere mit der Rücklaufleitung 15. Durch den Wechsel von einer benachbarten Stellung in die andere wird der Durchfluß durch den Hydromotor 1 geändert, so daß dieser entsprechend dem offenen Kreislauf vor- oder rückwärts angetrieben wird.

Die Umrandung des Steuergehäuses 2 ist durch eine strichpunktierte Linie 17 symbolisiert. Daraus ergibt sich, daß die Druckmittelleitungen 11, 12 nach den Anschlußöffnungen 9, 10 innerhalb des Steuergehäuses 2 verlaufen und mindestens teilweise durch eingearbeitete Kanäle gebildet werden. Im Steuergehäuse 2 ist ein Wechselventil 18 enthalten, das über Druckmittelleitungen 19, 20 an die Druckmittelleitungen 11, 12 angeschlossen ist und jeweils die druckführende Druckmittelleitung mit einer Steuerdruckleitung 22, die zur Zweipunktverstellung 25 des Hydromotors 1 führt, verbindet.

In den Druckmittelleitungen 11, 12 sind Fahrbremsventile 28, 29 vorgesehen und parallel dazu Bypassleitungen 26, 27 mit Rückschlagventilen 30, 31, die zum Hydromotor 1 hin öffnen. Zwischen dem 4/3-Wegeventil 14 und dem Fahrbremsventil 28 führt eine Drucksteuerleitung 32 zu dem Fahrbremsventil 29 in der Druckmittelleitung 12 und von der Druckmittelleitung 12 eine Drucksteuerleitung 33 zu dem Fahrbremsventil 28 in der Druckmittelleitung 11. Die Fahrbremsventile 28, 29 sind durch Federn 47, 52, 59 in Schließrichtung vorgespannt.

Die Druckmittelleitungen 11, 12 sind alternativ Zu- oder Abflußleitungen des Hydromotors. Auf einer Abtriebswelle 24 des Hydromotors wirkt eine Feststellbremse 23, die federvorgespannt ist und durch das Druckmittel mittels separater Ansteuerung bei Inbetriebnahme des hydrostatischen Getriebes gelüftet wird.

Am Steuergehäuse 2 befindet sich ein Anschluß 34 für eine von außen kommende Drucksteuerleitung. Von diesem führt innerhalb des Steuergehäuses 2 eine Drucksteuerleitung 35 zu einem Stellglied eines 3/2-Ventils 36, an dem die Drucksteuerleitung 22 über eine davon abzweigende Drucksteuerleitung 37 und ferner über eine Leitung 38 und eine Drossel 39 die Zweipunktverstellung 25 des Hydromotors 1 angeschlossen sind. Mit einem Leckölanschluß 40 sind sowohl das 3/2-Ventil 36 über eine Leckölleitung 41 als auch der Hydromotor 1 über eine Leckölleitung 42 und eine Sammelleitung 43 verbunden.

Ein Ventilgehäuse des Fahrbremsventils 28, 29 (Fig. 3) ist mit 45 bezeichnet. Es ist an einem Ende durch einen aufschraubbaren Deckel 46 geschlossen. An diesem stützt sich eine Feder 47 ab, die durch Beilagescheiben 21 unterschiedlicher Stärke auf ein gewünschtes Maß vorgespannt werden kann. Die Feder 47 stützt sich auf ihrer dem Deckel 46 abgewandten Seite an einem Steuerkolben 48 ab. Innerhalb des Steuerkolbens 48 ist in einem Ausgleichsraum 51 ein Stützkolben 49 mit einer Dichtung 50 enthalten, der sich über einen zylindrischen Fortsatz am Deckel 46 anlegt. Eine Druckfeder 52 ist zwischen einer Stirnfläche 53 am Stützkolben 49 und einer Stirnfläche 54 am Steuerkolben 48 angeordnet. Die Stirnseite 54 des Steuerkolbens 48 enthält eine als Drosselstelle ausgebildete Ausgleichsbohrung 55 zwischen dem Ausgleichsraum 51, in dem die Feder 52 untergebracht ist, und der Öffnung 61 zum Hydromotor 1. Der Gehäuseraum, in dem sich die Druckfeder 47 befindet, ist über eine Verbindungsbohrung 56 an einer Leckölleitung (nicht dargestellt) im Steuergehäuse 2 angeschlossen, so daß keine zusätzlichen Leitungen außerhalb des Steuergehäuses erforderlich sind.

Das dem Deckel 46 abgewandte Ende des Steuerkolbens 48 ist als Ventilsitz 57 ausgebildet. Das Gegenstück 58 des Ventilsitzes 57 ist ein Kolben, der im Ventilgehäuse 45 geführt ist und sich auf einer Feder 59 abstützt. Das Fahrbremsventil weist zwei Öffnungen 60 und 61 für den Durchfluß des Druckmittels auf. Der Durchfluß wird durch die als Ventil kooperierenden Kolben 48, 58 gesteuert. Angrenzend an den Ventilsitz 57 ist ein Drosselspalt 63 vorgesehen, dessen Querschnitt sich mit zunehmender Öffnung allmählich vergrößert, wodurch ein Pendeln des Steuerkolbens zwischen der Schließlage und der geöffneten Stellung verhindert wird. Ein Anschluß für die Drucksteuerleitungen 32 bzw. 33 ist mit 62 bezeichnet.

Funktionsbeschreibung:

Über zwei Fahrpedale (nicht dargestellt) wird die Fahrgeschwindigkeit und der Vorwärts- oder Rückwärtsfahrbereich gewählt. Je nach Fahrbereich lenkt das 4/3-Wegeventil 14 den Druck der verstellbaren Hydro-

3

EP 0 428 581 B1

pumpe auf eine der Druckmittelleitungen 11 oder 12. Die jeweils andere der Druckmittelleitungen 11 oder 12 ist mit der druckfreien Rücklaufleitung 15 verbunden. Bei Neutralstellung (Mittelstellung) des 4/3-Wegeventils 14 sind beide Druckmittelleitungen 11, 12 mit der Rücklaufleitung 15 verbunden.

Die weitere Funktionsbeschreibung erfolgt für die Stellung des 4/3-Wegeventils 14, bei der der Druck der Hydropumpe auf die Druckmittelleitung 11 gegeben wird und die Druckmittelleitung 12 mit der druckfreien Rücklaufleitung 15 verbunden ist. Bei umgekehrter Druckverteilung in den Druckmittelleitungen 11 und 12 bei der entgegengesetzten Schaltstellung des 4/3-Wegeventils 14 gilt die Funktionsbeschreibung für die Steuerelemente entsprechend für die andere Seite.

Das Druckmittel, Hydrauliköl, fließt unter Druck durch die Druckmittelleitung 11 und die Anschlußöffnung 9 in das Steuergehäuse 2. Der Druck beaufschlagt das Wechselventil 18, das z. B. über eine Kugel die Leitung 20 sperrt und den Druck über die Steuerdruckleitung 22 auf die Zweipunktverstelleinheit 25, 36 des Hydromotors 1 wirken läßt. Das Druckmittel beaufschlagt ferner über die Öffnung 60 das Fahrbremsventil 28 und verschiebt das Gegenstück 58 des Steuerkolbens 48 entgegen der kraft der Feder 59 vom Ventilsitz 57 und öffnet damit das Fahrbremsventil 28, so daß durch die Öffnung 61 Druckmittel zum Hydromotor 1 fließt und ihn antreibt. Ein Teil des Volumenstromes fließt unter Umgehung des Fahrbremsventils 28 durch die Bypassleitung 26 und das Rückschlagventil 30 zum Hydromotor 1.

Vom Hydromotor 1 fließt das Druckmittel über das Fahrbremsventil 29 und das 4/3-Wegeventil 14 durch die Druckmittelleitung 12 und die Rücklaufleitung 15 ab. Das Rückschlagventil 31 verhindert den Rückfluß durch die Bypassleitung 27, so daß das gesamte Fördervolumen durch das Fahrbremsventil 29 fließt, das vom Druck in der Drucksteuerleitung 32 solange offengehalten wird, wie der Druck in der Druckmittelleitung 11 einen bestimmten Druck nicht unterschreitet. Dies geschieht dadurch, daß der Druck über die Drucksteuerleitung 32 und den Anschluß 62 auf eine abgesetzte Kolbenfläche 65 des Steuerkolbens 48 wirkt. Dadurch wird der Steuerkolben 48 entgegen der Kraft der Federn 47 und 52 verschoben und trennt somit am Ventilsitz 57 den Steuerkolben 48 vom Gegenstück 58. Der freigegebene Ventilquerschnitt erlaubt den Durchfluß des Druckmittels von der Öffnung 61 auf der Seite des Hydromotors zur Öffnung 60 und von da zum 4/3-Wegeventil 14.

Der Druck in der Druckmittelleitung 11 genügt auch bei sehr kleiner Antriebsleistung der Hydropumpe, um das Fahrbremsventil 29 in der Druckmittelleitung 12 offenzuhalten.

Wird im Schubbetrieb der Hydromotor 1 vom Antriebsrad 5 angetrieben und fällt der Druck in der Druckmittelleitung 11 und damit auch in der Drucksteuerleitung 32 unter einen bestimmten Wert ab, bewegt sich das Fahrbremsventil 29 entsprechend dem Druckabfall in Schließrichtung, da die abgesetzte Kolbenfläche 65 des Steuerkolbens 48 nicht mehr ausreichend mit Druck beaufschlagt wird, so daß der Steuerkolben 48 unter der Kraft der Federn 47, 52 gegen das ebenfalls in Schließstellung zurückkehrende Gegenstück 58 den Rückfluß vom Hydromotor drosselt. Der Hydromotor 1 arbeitet nun gegen das sich schließende Fahrbremsventil. Bei fehlendem Steuerdruck (Zulaufdruck) wird das Fahrzeug voll abgebremst. Steigt der Rücklaufdruck weiter an, öffnet der Steuerkolben 48 nach Art eines Überdruckventils.

Durch den Anschluß 34 wirkt Druck von einer außerhalb des Steuergehäuses 2 liegenden regelbaren Druckquelle über die Leitung 35 auf das Stellglied des 3/2-Ventils 36. Dieses verbindet einen Druckraum einer Zweipunktverstelleinheit 25 über eine Drossel 39 und Leitungen 38 und 41 mit einer druckfreien Leckölleitung 43.

Bei einer Steuerdruckbeaufschlagung, z. B. von 30 bar, in der Leitung 35 verbindet die Stelleinheit des 3/2-Ventils 36 den Druckraum der Zweipunktverstelleinheit 25 über die Leitungen 37, 38 mit der Steuerdruckleitung 22, wodurch der Hydromotor 1 auf ein geringeres Verdrängungsvolumen eingestellt wird. Lecköl vom Hydromotor 1 fließt über die Leitungen 42 und 43 ab.

Über eine Drucksteuerleitung 44 wird die Feststellbremse 23 gelüftet, und zwar bevor der hydrostatische Antrieb wirkt.

Bezugszeichen

| | |
|---|---|
| 1 | Hydromotor |
| 2 | Steuergehäuse |
| 3 | Gleiskette |
| 4 | Fahrzeugrahmen |
| 5 | Antriebsrad |
| 6 | Nabe |
| 7 | Planetengetriebe |
| 8 | Aufnahmezentrierung |
| 9 | Anschlußöffnung |
| 10 | Anschlußöffnung |

4

| 11 | Druckmittelleitung |
|----|--------------------|
| 12 | Druckmittelleitung |
| 13 | Druckmittelleitung |
| 14 | 4/3-Wegeventil |
| 15 | Rücklaufleitung |
| 16 | Tank |
| 17 | Gehäuseumrandung |
| 18 | Wechselventil |
| 19 | Druckmittelleitung |
| 20 | Druckmittelleitung |
| 21 | Beilagescheiben |
| 22 | Steuerdruckleitung |
| 23 | Feststellbremse |
| 24 | Abtriebswelle |
| 25 | Zweipunkt-Verstellung |
| 26 | Bypass-Leitung |
| 27 | Bypass-Leitung |
| 28 | Fahrbremsventil |
| 29 | Fahrbremsventil |
| 30 | Rückschlagventil |
| 31 | Rückschlagventil |
| 32 | Drucksteuerleitung |
| 33 | Drucksteuerleitung |
| 34 | Anschluß |
| 35 | Leitung |
| 36 | 3/2-Ventil |
| 37 | Leitung |
| 38 | Leitung |
| 39 | Drossel |
| 40 | Leckölanschluß |
| 41 | Leckölleitung |
| 42 | Leckölleitung |
| 43 | Leckölleitung |
| 44 | Drucksteuerleitung |
| 45 | Ventilgehäuse |
| 46 | Deckel |
| 47 | Feder |
| 48 | Steuerkolben |
| 49 | Stützkolben |
| 50 | Dichtung |
| 51 | Ausgleichsraum |
| 52 | Feder |
| 53 | Stirnfläche |
| 54 | Stirnfläche |
| 55 | Ausgleichsbohrung |
| 56 | Verbindungsbohrung |
| 57 | Ventilsitz |
| 58 | Gegenstück |
| 59 | Feder |
| 60 | Öffnung |
| 61 | Öffnung |
| 62 | Anschluß |
| 63 | Drosselspalt |
| 64 | Stirnseite |
| 65 | abgesetzte Kolbenfläche |

EP 0 428 581 B1

## Patentansprüche

1. Hydrostatischer Antrieb für Fahrzeuge, insbesondere Raupenfahrzeuge, mit einem in einer Nabe eines Antriebsrades angeordneten Hydromotor, in bzw. an dessen Steuergehäuse neben anderen Steuerventilen Fahrbremsventile vorgesehen sind, die in Druckleitungen angeordnet sind und in Abhängigkeit vom Betriebsdruck des Hydromotors den Rückflußquerschnitt auf- bzw. zusteuern, dadurch **gekennzeichnet** , daß
   – das Fahrbremsventil (28, 29) einen stirnseitig durch eine Feder (47) belasteten Steuerkolben (48) hat,
   – auf dessen gegenüberliegender Stirnseite (64) der Rücklaufdruck vom Hydromotor wirkt und
   – der mit einem schmalen, ringförmigen Ventilsitz (57) am äußeren Rand dieser Stirnseite (64) im geschlossenen Zustand an einer entsprechenden Sitzfläche eines Gegenstückes (58) anliegt und den Durchfluß sperrt,
   – wobei an den Ventilsitz (57) ein Drosselspalt (63) angrenzt, der sich mit der Öffnung des Fahrbremsventils (28, 29) allmählich erweitert.

2. Antrieb nach Anspruch 1, dadurch **gekennzeichnet** , daß parallel zu jedem Fahrbremsventil (28, 29) eine Bypassleitung (26, 27) verläuft, die mit je einem in Richtung des Hydromotors (1) öffnenden Rückschlagventil (30, 31) versehen ist.

3. Antrieb nach Anspruch 1, dadurch **gekennzeichnet** , daß die Druckleitungen (11, 12) auf der dem Hydromotor (1) abgewandten Seite der Fahrbremsventile (28, 29) durch eine Steuerleitung (19, 20) verbunden sind, in der ein Wechselventil (18) angeordnet ist, von dem eine Steuerdruckleitung (22) für einen Verstellmechanismus (25) des Hydromotors (1) abgeht.

4. Antrieb nach Anspruch 1, dadurch **gekennzeichnet** , daß eine Drucksteuerleitung (33) von der Druckleitung (12) vor dem Fahrbremsventil (29) abzweigt und das Fahrbremsventil (28) in der Leitung (11) steuert und eine Drucksteuerleitung (32) vor dem Fahrbremsventil (28) von der Druckleitung (11) abzweigt und das Fahrbremsventil (29) in der Leitung (12) steuert.

5. Antrieb nach Anspruch 1, dadurch **gekennzeichnet** , daß der Steuerkolben (48) einen zur Druckfeder (47) hin offenen Ausgleichsraum (51) hat, den ein am Ventilgehäuse (45) anliegender Stützkolben (49) abschließt, zwischen dem eine Druckfeder (52) der gegenüberliegenden Stirnfläche (54) des Steuerkolbens (48) angeordnet ist und daß eine Ausgleichsbohrung (55) mit Drosselwirkung zwischen dem Ausgleichsraum (51) und einer zum Hydromotor (1) führenden Öffnung (61) liegt.

6. Antrieb nach Anspruch 5, dadurch **gekennzeichnet** , daß der Gehäuseraum, in dem die Druckfeder (47) liegt, über eine Verbindungsbohrung (56) an einer Leckölleitung im Steuergehäuse (2) angeschlossen ist.

7. Antrieb nach Anspruch 1, dadurch **gekennzeichnet** , daß der Steuerkolben (48) an einer abgesetzten Kolbenfläche (65), entgegen der Federwirkung in Öffnungsrichtung, mit einem Ansteuerdruck beaufschlagt ist.

8. Antrieb nach Anspruch 4, dadurch **gekennzeichnet** , daß der Ansteuerdruck über eine Drosselstelle auf den Steuerkolben (48) wirkt.

## Claims

1. A hydrostatic drive mechanism for vehicles, inter alia for tracked vehicles, having a hydraulic motor arranged in a hub of a drive wheel, there being provided in or on the control housing of the hydraulic motor, in addition to other control valves, brake valves which are arranged in pressure lines and which increase or decrease the cross-sectional area for return flow according to the operating pressure of the hydraulic motor, characterized in that
   – the brake valve (28, 29) has a control piston (48), one end of which is loaded by a spring (47),
   – the opposite end (64) of which is acted upon by the return flow pressure from the hydraulic motor, and
   – which in its closed position abuts, with a narrow annular valve seat (57) on the outer edge of its latter end (64), against a corresponding seating face of a counterpiece (58) and interrupts the through flow,
   – there being adjacent to the valve seat (57) a throttle aperture (63) which gradually enlarges as the brake valve (28, 29) is opened.

2. A drive mechanism according to Claim 1, characterized in that in parallel with each brake valve (28, 29) a bypass line (26, 27) is disposed which is provided with a non-return valve (30, 31) which opens towards the hydraulic motor (1).

3. A drive mechanism according to Claim 1, characterized in that the pressure lines (11, 12) on the side of the brake valves (28, 29) away from the hydraulic motor (1) are interconnected by a control line (19, 20) in which there is arranged a shuttle valve (18) from which a control pressure line (22) for an adjusting mechanism (25) for the hydraulic motor (1) departs.

4. A drive mechanism according to Claim 1, characterized in that a pressure control line (33) branches off

6

from the pressure line (12) before the brake valve (29) and controls the brake valve (28) in line 11 and a pressure control line (32) branches off from the pressure line (11) before the brake valve (28) and controls the brake valve (29) in line 12.

5. A drive mechanism according to Claim 1, characterized in that the control piston (48) has a compensating cavity (51) which is open towards the compression spring (47) and is closed by a support piston (49) which abuts against the valve cover (46), in which cavity (51) a compression spring (52) is arranged towards the opposite end face (54) of the control piston (48), and in that a compensating bore (55) having a throttle effect is disposed between the compensating cavity (51) and an aperture (61) leading to the hydraulic motor (1).

6. A drive mechanism according to Claim 5, characterized in that the housing cavity in which the compression spring (47) is accommodated, is connected via a connecting bore (56) with a leakage oil line in the control housing (2).

7. A drive mechanism according to Claim 1, characterized in that an actuating pressure acting in the direction of opening, against the spring action, is applied to a piston face (65) having the form of a shoulder on the control piston (48).

8. A drive mechanism according to Claim 4, characterized in that the actuating pressure acts on the control piston (48) via a throttle point.


## Revendications

1. Transmission hydrostatique pour véhicules, notamment pour véhicules à chenilles, comportant un moteur hydraulique disposé dans un moyeu d'une roue motrice et pourvu d'une boîte de distribution dans laquelle ou sur laquelle sont prévues, outre d'autres soupapes de commande, des soupapes de freinage qui sont montées dans des conduits de pression et qui augmentent ou réduisent la section de retour du fluide en fonction de la pression de fonctionnemernt du moteur hydraulique, **caractérisée** en ce que :
   – la soupape de freinage (28, 29) comporte un piston de commande (48) dont une face frontale est sollicitée par un ressort (47)
   – et dont la face frontale opposée (64) est soumise à la pression de retour du moteur hydraulique,
   – dans une position fermée, ledit piston de commande s'appuie, par un mince siège annulaire de soupape (57) ménagé sur le bord extérieur de ladite face frontale opposée (64), contre une surface de siège correspondante d'une contre-pièce (58) et obstrue l'écoulement, et
   – ledit siège de soupape (57) délimite une fente d'étranglement (63) qui s'élargit progressivement par ouverture de la soupape de freinage (28, 29).

2. Transmission selon la revendication 1, **caractérisée** en ce qu'un conduit de dérivation (26, 27) est branché en parallèle à chaque soupape de freinage (28, 29) et comporte un clapet anti-retour (30, 31) s'ouvrant en direction du moteur hydraulique (1).

3. Transmission selon la revendication 1, **caractérisée** en ce que lesdits conduits de pression (11, 12) sont reliés mutuellement, du côté opposé au moteur hydraulique (1) par rapport aux soupapes de freinage (28, 29), par un conduit de commande (19, 20) dans lequel est montée une soupape à deux voies (18) d'où part un conduit de pression pilote (22) allant à un mécanisme de réglage (25) du moteur hydraulique (1).

4. Transmission selon la revendication 1, **caractérisée** en ce qu'un conduit de commande de pression (33) est dérivé du conduit de pression (12) en amont de la soupape de freinage (29) et commande la soupape de freinage (28) montée dans le conduit (11), et en ce qu'un conduit de commande de pression (32) est dérivé du conduit de pression (11) en amont de la soupape de freinage (28) et commande la soupape de freinage (29) montée dans le conduit (12).

5. Transmission selon la revendication 1, **caractérisée** en ce que ledit piston de commande (48) contient une chambre d'équilibrage (51) ayant, du côté dudit ressort (47), une ouverture obturée par un piston d'appui (49) qui bute contre le corps de soupape (45), un ressort de compression (52) étant monté entre le piston d'appui et ladite face frontale opposée (54) du piston de commande (48), et en ce qu'un orifice d'équilibrage (55) à effet d'étranglement est disposé entre la chambre d'équilibrage (51) et une ouverture (61) conduisant au moteur hydraulique (1).

6. Transmission selon la revendication 5, **caractérisée** en ce que la chambre dans laquelle se trouve ledit ressort (47) est raccordée par un orifice de communication (56) à un conduit d'huile de fuite dans la boîte de distribution (2).

7. Transmission selon la revendication 1, **caractérisée** en ce que le piston de commande (48) est sollicité, sur une surface de décrochement (65) du piston, par une pression de commande agissant dans le sens d'ouverture à l'encontre de l'action du ressort.

8. Transmission selon la revendication 4, **caractérisée** en ce que la pression de commande agit sur le piston de commande (48) à travers un étranglement.

FIG.1

FIG.3

FIG.2